# EUROPEAN PATENT APPLICATION

(11) **EP 1 312 558 A1**
(43) Date of publication of application: **21.05.2003**
(21) Application number: 02257875.1
(22) Date of filing: 14.11.2002
(51) Int. Cl.: B65D 19/44

(54) **Packaging**

(30) Priority: 14.11.2001 GB 0127324
(71) Applicant: Marfani, John Tariq, Mobberley, Cheshire WA16 7LH (GB)
(72) Inventor: Marfani, John Tariq, Mobberley, Cheshire WA16 7LH (GB)
(74) Representative: Wilson Gunn M'Caw

(57) **Abstract**

A reusable packing case (10) having collapsible walls contains reusable packaging. The packaging comprises a fabric structure (11), defining a number of compartments, suspended from rigid poles (12, 13). The rigid poles (12, 13) are secured to the packing case (10) in such a manner as to facilitate ready removal of the packaging before collapsing the walls of the packing case (10).

## Description

The present invention relates to reusable packaging for use in reusable packing cases.

It is now commonplace to use reusable packing cases, particularly in the transportation of vehicle components. Such reusable packing cases generally consist of a large rigid plastics box with collapsible side walls, connected via hinges to the base. Rigid plastics separators may be employed to separate components in like manner to a box for transporting bottles of wine. In one prior art arrangement the items which are to be transported in the box are located in the individual folds of a fabric structure, a so-called dunnage, suspended from wires which are bolted to opposing walls of the packing case. The fabric structure is in a single piece having a plurality of fabric loops which are sewn to the fabric along its length. Once the transported items have been removed from the packing cases the side walls of the box are collapsed and the collapsed cases are returned to the factory to be restocked with further similar items.

The interior packaging (the dunnage) for the packing cases; i.e. the fabric structure and wire supports, suffers from a number of drawbacks. Firstly it is difficult to move the walls into the upstanding position as opposing walls are pulled together under tension from the wires. Furthermore, when the structure is charged with items the wire supports tend to sag. As multiple layers are often provided in the cases the sagging of the wires can lead to the items, which are stored in different layers, knocking against one another during transportation and consequently to the items being damaged. The wire sagging also hinders loading and unloading of the fabric structures. The loops carrying the fabric structure, when charged with items, are subject to considerable stress and are consequently prone to breaking.

The fabric structure despite using a considerable amount of fabric, two layers of fabric being provided between each item, has no side walls to prevent lateral movement of the items against the case wall. The use of such a large amount of fabric is also such that it may hinder the full collapsing of the box, particularly when multiple layers of such fabric structures are used.

The present invention has been made from a consideration of these problems.

According to a first aspect of the present invention there is provided reusable packaging for use in a reusable packing case, said packaging comprising a structure made from a flexible material secured to and suspended from poles, the packaging being securable to the packing case via means which facilitate removal of the packaging from the packing case.

The poles are secured to the packing case in such a manner that they may be readily disengaged from the case to aid ready collapsing of the box. The rigid poles furthermore do not sag, unlike the prior art wire supports.

The flexible material ideally comprises textile. A plurality of eyelets are preferably provided in the flexible structure for securing the structure to the rods such that the flexible structure may be suspended therefrom. The use of such eyelets provides a strong structure. Alternatively one or more channels may be provided in the fabric, each for receiving a pole and each channel preferably extending the full length of the fabric structure. For example, the channels may be made by folding over part of the fabric structure onto itself and stitching the end of the folded area to the remainder of the fabric structure, preferably with a double stitch.

The reusable packaging ideally comprises a structure comprising a base, end walls, side walls, and preferably dividing walls, to separate the structure into individual compartments. The dividing walls would usually be the same or similar thickness to the base and side walls. Nylon material is preferred for making the structure. The fabric structure is ideally secured together by stitching. The base of the dividing walls would usually be sewn to the base of the fabric. Then the sides of the dividing walls would be sewn to the side walls.

The eyelets would preferably extend in two rows, through the end walls and dividing walls at a location substantially adjacent the side walls.

According to a second aspect of the present invention there is provided reusable packaging for use in a reusable packing case, said packaging comprising a structure made from a flexible material having a plurality of eyelets, operative to be received on supporting structures provided in the packing case so as to support the packaging material in the packing case.

According to a third aspect of the present invention there is provided reusable packaging for use in a reusable packing case, said packaging comprising a structure made from a flexible material that has a base, end walls, side walls and dividing walls to separate the structure into individual compartments.

The arrangement described above is superior to the folded structure of the prior art.

The means for connecting the packaging to the packing case preferably comprises loops connected to the packaging which may be received over hooks provided in the packing case. The hooks are ideally countersunk in the wall of the case. Alternatively fasteners may be used such as clip shackles which for example are commonly used in mountaineering, may engage a pin or the like ideally countersunk in a hole in the wall of the packing case such that the clip shackle may only be removed by unclipping. Additionally or alternatively the means for connecting the packaging to the packing case comprises slots and/or apertures in opposing sides of the packing case for receiving, respectively, the ends of the rods.

According to the present invention there is provided a reusable packing case containing reusable packaging, said packaging comprising a structure made from a flexible material secured to and suspended from poles, the packaging being secured to the packing case via means which facilitate removal of the packaging from the packing case.

The packaging preferably has walls and a base and the walls are connected to the base via hinges such that the walls may be folded over the base.

In order that the present invention may be more readily understood a specific embodiment thereof will now be described by way of example only:-
Fig.1 is a perspective view from the top showing a reusasble packing case containing packaging in accordance with the present invention; and
Fig. 2 illustrates one arrangement for securing the support poles to the packing case;
Fig. 3 illustrates a second arrangement for securing the support poles to the packing case;
Fig. 4 shows a further arrangement for securing the support poles to the packing case; and
Fig. 5 is a perspective view from the top showing a second reusable packing case containing packaging in accordance with the invention.

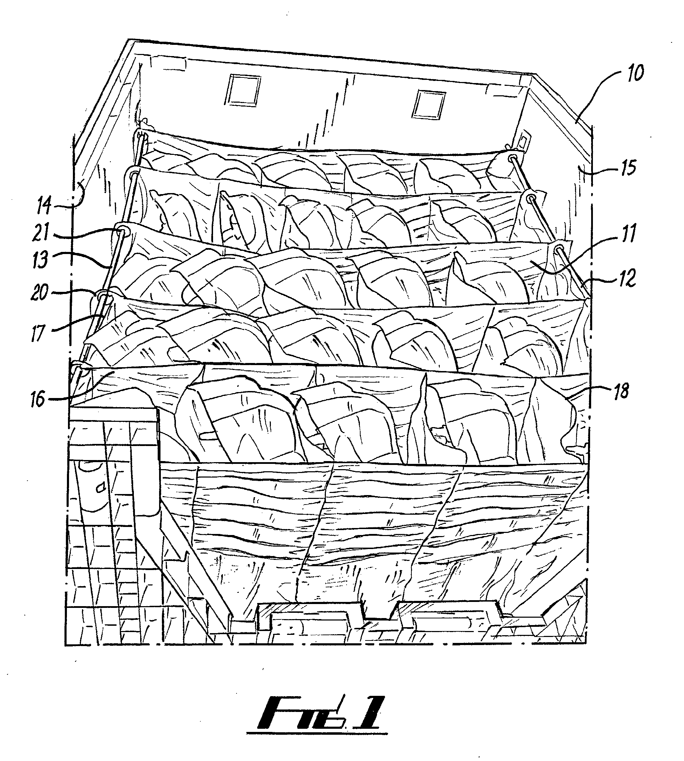

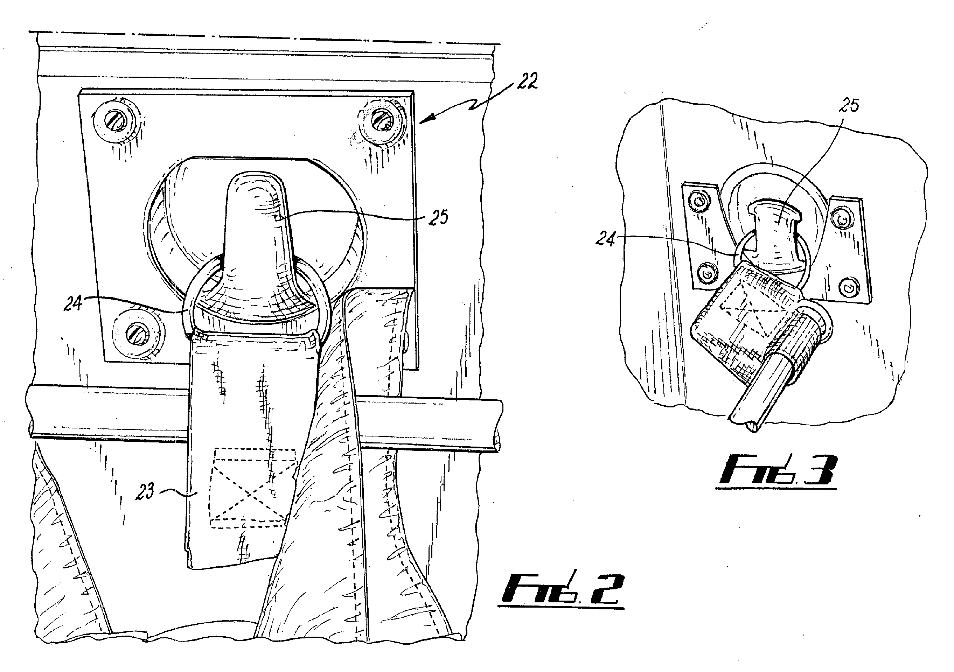

Referring to Figs. 1 and 2 a packing case 10 comprises a nylon fabric packaging structure 11 mounted on poles 12, 13 located on opposing sides 14, 15 of the packing case.

The fabric structure 11 has a number of dividing walls 16 which extend between the side walls 17 of the structure. Additional separators 18 extend between the dividing walls 16 so as to define a number of individual compartments, one for each item to be transported. The side walls 17 of the outermost compartments do not extend to the end of the dividing walls. The part 20 of each of the dividing walls that is located outside the compartments has located through it, towards its top, an eyelet 21. A rigid glass fibre reinforced polyester resin rod 12, 13 passes through the aligned eyelets 21 on each side of the fabric structure. The rods 12, 13 are secured to the packing case by a plurality of connectors 22 of the type shown in Fig. 2. Here a loop of fabric 23 extends around the pole 12, 13 and captures a metal ring 24. The metal ring 24 is received over a hook 25 which is countersunk in the inside of the side walls of the packing case.

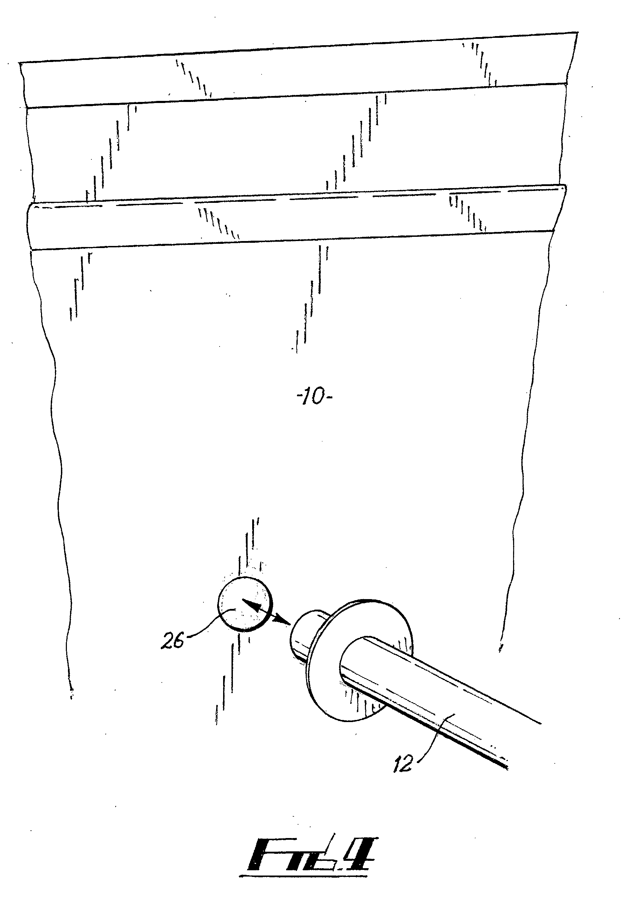

Referring to Fig. 3 a second arrangement is shown for securing a hook 25 to the metal ring 24. Here the pole is orientated to the packing case perpendicular to the pole illustrated in Fig. 2. Consequently the metal ring extends out of the fabric webbing in a direction forward of the end of the pole.

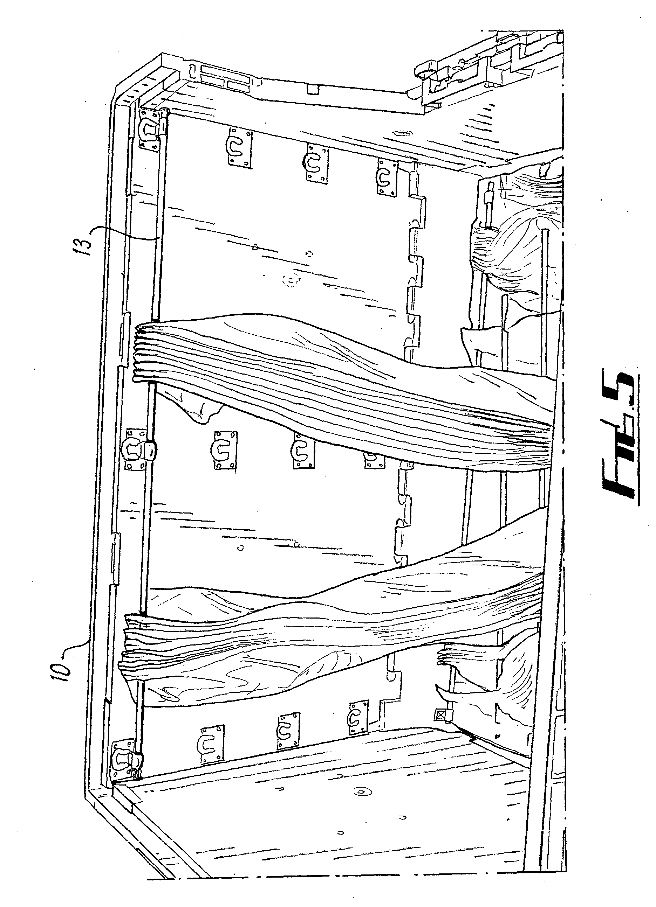

Referring to Fig. 4 here the end of the pole 12 is received in an aperture 26 provided in a wall of the packing case 10 in order to secure the pole to the packing case 10. A similar fixing arrangement is provided in the opposite wall of the packing case 10.

Fig. 5 shows a second packing case in accordance with the invention. This is adapted to receive four sets of relatively shallow fabric structures, or so-called dunnage. Each is suspended between two rigid poles which are connected via metal rings to countersunk hooks in similar manner to that illustrated in Fig. 2.

It is to be understood that the above described embodiment is by way of illustration only. Many modifications and variations are possible. All of the layers of packaging may be supported via the same hooks in the packing case or they may be supported via different hooks. In another embodiment the separators 18 may be omitted. Such an arrangement is particularly useful when long thin components are being transported. Here these components are effectively suspended by the packaging.

## Claims

1. Reusable packaging for use in a reusable packing case, said packaging comprising a structure made from a flexible material secured to and suspended from poles, the packaging being securable to the packing case via means which facilitate removal of the packaging from the packing case.

2. Reusable packaging as claimed in claim 1, wherein the flexible material comprises textile.

3. Reusable packaging as claimed in claim 1 or claim 2, wherein the structure of flexible material comprises a plurality of eyelets, operative to be received on one of said poles.

4. Reusable packaging as claimed in any preceding claim, wherein the poles comprise glass reinforced polymeric material.

5. Reusable packaging as claimed in any preceding claim, wherein the means for connecting the packaging to the packing case comprises loops connected to the packaging which may be received over hooks provided in the packing case.

6. Reusable packaging as claimed in any preceding claim, wherein the means for connecting the packaging to the packing case comprises slots in opposing walls of the packing case for receiving, respectively, the ends of the poles.

7. Reusable packaging as claimed in any preceding claim, wherein the structure made from flexible material comprises a base, end walls, side walls and dividing walls to separate the structure into individual compartments.

8. A reusable packing case containing reusable packaging, said packaging comprising a structure made from a flexible material secured to and suspended from poles, the packaging being secured to the packing case via means which facilitate removal of the packaging from the packing case.

9. A reusable packing case as claimed in claim 8, wherein the packing case has walls and a base and the walls are connected to the base via hinges such that the walls may be folded over the base.

10. Reusable packaging for use in a reusable packing case, said packaging comprising a structure made from a flexible material having a plurality of eyelets, operative to be received on supporting structures provided in the packing case so as to support the packaging material in the packing case.

11. Reusable packaging for use in a reusable packing case, said packaging comprising a structure made from a flexible material that has a base, end walls, side walls and dividing walls to separate the structure into individual compartments.
